# EUROPEAN PATENT APPLICATION

(11) **EP 3 101 542 A1**
(43) Date of publication of application: **07.12.2016**
(21) Application number: 15742548.9
(22) Date of filing: 15.01.2015
(51) Int. Cl.: G06F 9/50, G06F 9/48, H04M 11/00, H04Q 9/00

(54) **SERVER, DATA PROCESSING METHOD**

(30) Priority: 31.01.2014 JP 2014016280
(71) Applicant: NEC Corporation, Tokyo 108-8001 (JP)
(72) Inventor: TAKAGI, Kenki, Tokyo 108-8001 (JP)
(74) Representative: Betten & Resch
(86) International application number: PCT/JP2015/000164
(87) International publication number: WO 2015/115042

(57) **Abstract**

In order to solve a problem that, in servers of PTL 1 and the like, when collection devices increase in number, the processing capability needs to be enhanced depending on the number of collection devices, a server according to the present invention includes an accumulation means that, when receiving data from a plurality of appliances connected via a network, accumulates the data in such a state that the data are identifiable separately for each service for which the data are used and a processing means that takes out the data by the service from the data accumulated by the accumulation means and performs a predetermined process.

## Description

### [Technical Field]

The present invention relates to a server and a data processing method and, more particularly, relates to a server and a data processing method that collect data from a sensor or a terminal.

### [Background Art]

In general, there is known an M2M (machine to machine) service in which a server collects data from a device, such as a sensor and a terminal installed in a house, a car, and the like (hereinafter, collectively referred to as "collection device"), and provides various services. For example, in the field of agriculture, there is known an M2M service in which a server manipulates and analyzes data, such as temperature and humidity, collected from a plurality of collection devices installed in an agricultural land, and notifies information or instructions necessary for cultivation of crops to a user. The foregoing M2M service is expected to bring about productivity improvement and stability in quality regarding crops.

A system for realizing the foregoing M2M service is disclosed in the following PTL 1.

A wireless communication system of PTL 1 includes a plurality of M2M terminals that send collected data to a server via a base station and a gateway. The base station performs communication with the M2M terminal and a general mobile terminal. The gateway is connected to the base station and the server and controls data communication between the M2M terminal and the server. Furthermore, the wireless communication system of PTL 1 includes a call processing control apparatus that controls signaling communication such as transmission and reception by the M2M terminal. The base station, the gateway, and the call processing control apparatus are connected by wire in a mesh form.

When receiving a service start request from an M2M terminal or a general mobile terminal, at least one of the base station, the call processing control apparatus, and the gateway determines whether the service start request is a request from an M2M terminal. When determining that the service start request is a request from an M2M terminal, at least one of the base station, the call processing control apparatus, and the gateway assigns a common session identifier to the M2M terminal, as a session identifier for use in signaling communication and/or data communication. Each M2M terminal uses a common session identifier to perform signaling communication and or data communication with the server and send collected data to the server.

In accordance with the foregoing configurations and operations, in the wireless communication system of PTL 1, because a plurality of M2M terminals use a common session identifier to perform communication, it is possible to prevent exhaustion of session identifiers to be assigned to general mobile terminals and therefore prevent an adverse effect on communication of the mobile terminals.

### [Citation List]

### [Patent Literature]

PTL 1: Japanese Laid-open Patent Publication No. 2013-110550

### [Summary of Invention]

### [Technical Problem]

However, in a system that provides an M2M service, such as the wireless communication system of PTL 1, a general server (hereinafter, referred to as "server of the M2M service") has a problem that, when collection devices increase in number, the processing capability needs to be enhanced depending on the number of collection devices.

That is because the server of the M2M service performs processing every time it collects data from a collection device (specifically, a process of manipulating the collected data or a process of outputting the manipulated data to an application for analysis). That is, because the server of the M2M service performs processing for each collection device, an increase in the number of collection devices requires the processing capability to be enhanced depending on the increase.

Note that the server of the M2M service is assumed to collect data from several tens of millions of collection devices in the future. Therefore, in a server of a general M2M service, the processing capability needs to be greatly enhanced for several tens of millions of collection devices. Thus, the production cost of the server is expected to become high.

The present invention aims to provide a server and a data processing method that solves the above-described problems.

### [Solution to Problem]

To achieve the above-described object, a server of the present invention comprises: accumulation means for, when receiving data from a plurality of appliances connected via a network, accumulating the data in such a state that the data are identifiable separately for each service for which the data are used; and processing means for taking out the data by the service from the data accumulated by the accumulation means and performing a predetermined process.

To achieve the above-described object, a data processing method of the present invention comprises: accumulating, when data are received from a plurality of appliances connected via a network, the data in such a state that the data are identifiable separately for each service for which the data are used; and taking out the data by the service from the accumulated data and performing a predetermined process.

### [Advantageous Effects of Invention]

According to the present invention, a server of the M2M service, even when collection devices increase in number, no longer needs to enhance the processing capability depending on the number of collection devices.

### [Brief Description of Drawings]

[Fig. 1] Fig. 1 is a diagram illustrating an overall operation of a server in a first exemplary embodiment of the present invention.
[Fig. 2] Fig. 2 is a diagram illustrating a configuration example of the server in the first exemplary embodiment of the present invention.
[Fig. 3] Fig. 3 is a diagram (sheet 1) for describing an operation of a server in the first exemplary embodiment of the present invention.
[Fig. 4] Fig. 4 is a diagram (sheet 2) for describing the operation of the server in the first exemplary embodiment of the present invention.
[Fig. 5] Fig. 5 is a diagram for describing data that are set beforehand in the server in the first exemplary embodiment of the present invention.
[Fig. 6] Fig. 6 is a diagram showing a configuration example of a server in a second exemplary embodiment of the present invention.

### [Description of Embodiments]

Next, exemplary embodiments of the present invention will be described in detail with reference to the drawings.

### [First Exemplary Embodiment]

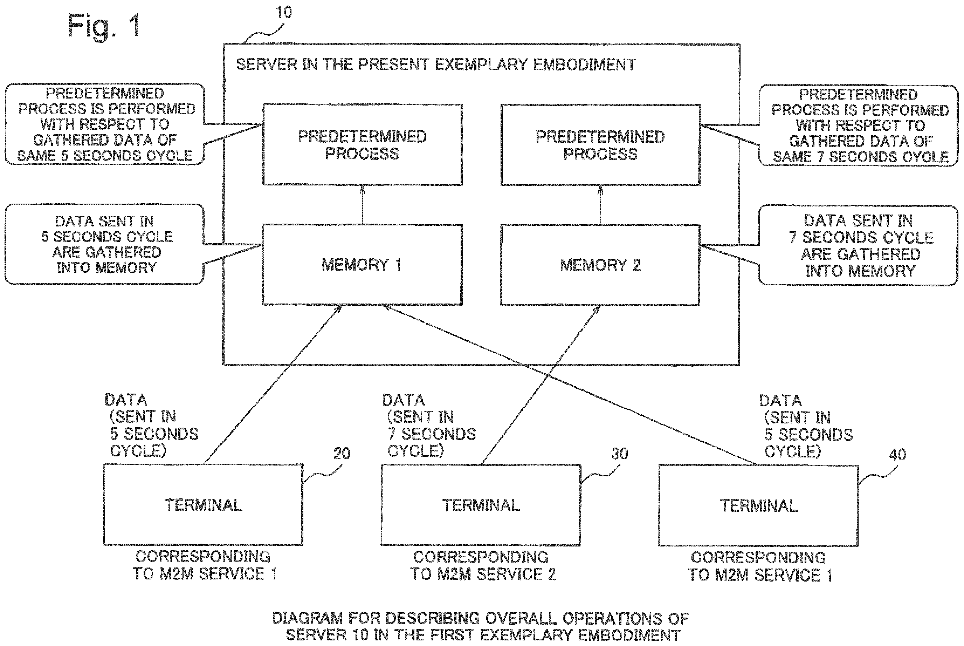

A server in a first exemplary embodiment of the present invention collects data sent from a terminal. The server in the present exemplary embodiment may collect data from a plurality of terminals. Each terminal is a general collection device that corresponds to a predetermined M2M service. That is, each terminal, as shown in Fig. 1, sends data to a server in a predetermined cycle (e.g., a cycle of 5 seconds or a cycle of 7 seconds) commensurate with the M2M service to which the terminal corresponds. The foregoing predetermined cycle will be hereinafter referred to as "sending cycle".

The server 10 in the present exemplary embodiment gathers data whose sending cycles are the same into a memory. For example, as shown in Fig. 1, in the case where each terminal sends data in a sending cycle of 5 seconds or 7 seconds, the server in the present exemplary embodiment gathers data (from the terminals 20 and 40) whose sending cycles are both equal to 5 seconds into a memory 1 and gathers data (from the terminal 30) whose sending cycle is 7 seconds into a memory 2. The server in the present exemplary embodiment performs a predetermined process on the gathered data whose sending cycles are equal, altogether.

In order to realize the foregoing operations, the server in the present exemplary embodiment performs processing as follows.

First, in order to gather data whose sending cycles are the same, the server in the present exemplary embodiment, receiving data from one of the terminals, finds what cycle the terminal is sending the data in, that is, the sending cycle. As for a concrete way to find the sending cycle, details will be described in [Description of Operations]. Next, the server in the present exemplary embodiment accumulates the received data into the memory that corresponds to the found sending cycle. For example, if the found sending cycle is 5 seconds, the server 10 in the present exemplary embodiment accumulates the received data into the memory (e.g., the memory 1) that corresponds to the sending cycle of 5 seconds. This is to gather data of the same sending cycle (e.g., the sending cycle of 5 seconds) into one memory. Which memory is the memory that corresponds to the sending cycle is set beforehand in the server of the present exemplary embodiment by a user of the server. Data of the same sending cycle (e.g., data of the sending cycle of 5 seconds or data of the sending cycle of 7 seconds) are accumulated and gathered into each of the memories. Next, the server 10 of the present exemplary embodiment performs a predetermined process for the data accumulated in each memory altogether when a constant time elapses. The server of the present exemplary embodiment is capable of performing the predetermined process separately for the data of each of the sending cycles. The foregoing constant time may be different for the individual memories. Furthermore, the predetermined process is a process of manipulating data or a process of outputting the manipulated data to an application for analysis and, concretely, is carried out as in S30 to S34 and S40 to S42 described later.

### (Description of Advantageous Effects)

Since the sending cycles and the M2M services have been associated with each other, performing the predetermined process separately for the data of each of the sending cycles means performing the process separately for the data of each of the M2M services. Therefore, the server of the present exemplary embodiment performs the process separately for the data of each of the M2M services. In consequence, the server of the present exemplary embodiment processes the data not for each terminal but for each M2M service, so that there is no longer need to enhance the processing capability according to the number of terminals.

Hereinafter, a configuration, functions, and operations of the server in the first exemplary embodiment of the present invention will be described.

### [Description of Configuration]

First, a configuration and functions of the server in the first exemplary embodiment of the present invention will be described.

### (1) Configuration of Server in the First Exemplary Embodiment of the Present Invention

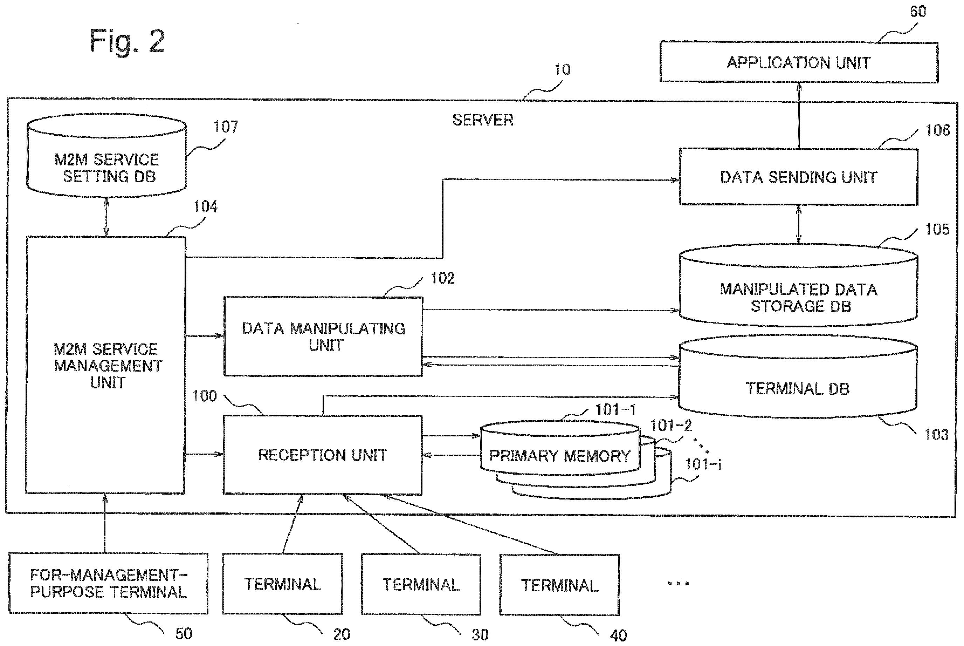

Fig. 2 is a diagram showing a configuration example of a server in the first exemplary embodiment of the present invention. As shown in Fig. 2, the server 10 of the present exemplary embodiment includes a reception unit 100, primary memories 101-i (i = 1 to 3), a data manipulating unit 102, a terminal DB (database) 103, and an M2M (machine to machine) service management unit 104. Furthermore, the server 10 of the present exemplary embodiment includes a manipulated data storage DB 105, a data sending unit 106, and an M2M service setting DB 107.

The reception unit 100 of the server 10 of the present exemplary embodiment is connected to terminals 20, 30 and 40. Incidentally, the reception unit 100 of the server 10, although not graphically shown, may be connected to the terminals 20, 30 and 40 via a general base station and a gateway, similarly to the server in the wireless communication system of PTL 1. The M2M service management unit 104 of the server 10 is connected to a for-management-purpose terminal 50. Furthermore, the data sending unit 106 of the server 10 is connected to an application unit 60. The individual function units of the server 10 of the present exemplary embodiment may be connected to one another.

While the application unit 60 may be provided within the server 10 of the present exemplary embodiment, the application unit 60 may also be provided outside the server 10 as shown in Fig. 2, that is, in a separate server (not graphically shown) that is connected to the server 10.

### (2) Functions of Terminals, etc., Connected to Server in the First Exemplary Embodiment of the Present Invention

### (2-1) Functions of Terminals 20, 30 and 40

The foregoing terminals 20, 30 and 40 are general collection devices that correspond to predetermined M2M services. Each of the terminals 20, 30 and 40 sends one piece of predetermined collected data to the reception unit 100 of the server 10 in every predetermined cycle (e.g., 5 seconds or 7 seconds) commensurate with the M2M service to which that terminal corresponds. The predetermined cycle will hereinafter be referred to as "sending cycle".

Incidentally, in each of the terminals 20, 30 and 40, an identifier that indicates that terminal (hereinafter, referred to as "terminal identifier") has been set by the manufacturer of the terminal. The terminals 20, 30 and 40, when sending data to the reception unit 100 of the server 10, send the terminal identifier by containing it in the data.

### (2-2) Functions of For-management-purpose Terminal 50

The for-management-purpose terminal 50 sets a predetermined set value in the M2M service management unit 104. Concretely, when a user inputs a predetermined set value and depresses a predetermined key, the for-management-purpose terminal 50 outputs the input predetermined set value to the M2M service management unit 104.

### (2-3) Functions of Application Unit 60

The application unit 60 is an application that, when data are input, performs analysis on the data and provides an M2M service to the M2M service user. Concretely, when data are input, the application unit 60 performs analysis on the data and notifies predetermined information or instructions that correspond to a result of the analysis to the terminal (not graphically shown) that the M2M service user possesses.

### (3) Functions of Server 10 in the First Exemplary Embodiment of the Present Invention

The server 10 is a common platform that collects data from the terminals 20, 30 and 40. Concrete functions of the server 10 are as follows.

First, receiving data from the terminals 20, 30 and 40 after being activated, the server 10 finds what cycle each terminal is sending the data in, that is, the sending cycle thereof. As for a concrete way to find the sending cycle, details will be described in [Description of Operations] below. Having found a sending cycle, the server 10 temporarily accumulates the received data in the primary memory 101-i that corresponds to the found sending cycle. Which primary memory 101-i is the primary memory 101-i that corresponds to the sending cycle is set beforehand in the server 10 by a user of the server 10. Every time the server 10 receives data from one of the terminals, the server 10 finds the sending cycle thereof and accumulates the received data in the primary memory 101-i that corresponds to the found sending cycle.

The server 10 performs, for each primary memory 101-i (i = 1 to 3), a predetermined process for the accumulated data when a constant time elapses. The constant time may be different in value from one primary memory 101-i to another.

### (4) Functions of Individual Parts Constituting Server of the First Exemplary Embodiment of the Present Invention

In order to be able to realize the functions indicated in "(3) Functions of Server 10 in the First Exemplary Embodiment of the Present Invention" stated above, individual parts that constitute the server 10 have the following functions.

### (4-1) Functions of Reception Unit 100

First, after the reception unit 100 is activated and then a predetermined set value is input from the M2M service management unit 104, the reception unit 100 stores the input predetermined set value.

When, after storing the predetermined set value, the reception unit 100 receives data from any one of the terminals 20, 30 and 40, the reception unit 100 finds what cycle that terminal is sending the data in, that is, the sending cycle thereof. This is to gather data of the same sending cycles into the primary memories 101-i. As for a concrete way to find the sending cycle, details will be described in [Description of Operations] discussed below.

Having found the sending cycle, the reception unit 100 temporarily accumulates the received data into the primary memory 101-i that corresponds to the found sending cycle. Due to this function, data of the same sending cycles are gathered into the individual primary memories 101-i.

Concretely, the reception unit 100 outputs the received data to the primary memory 101-i that corresponds to the found sending cycle. Note that the reception unit 100 outputs the received data after attaching thereto the found sending cycle. Which primary memory 101-i is the primary memory 101-i that corresponds to the sending cycle is set beforehand in the reception unit 100 by the user of the server 10.

Furthermore, the reception unit 100, on the basis of the found sending cycle, calculates the time for which to store the received data into the primary memory 101-i (hereinafter, referred to as "data storage period"). In conjunction with the gathering of data of the same sending cycles into the individual primary memories 101-i, the reception unit 100 performs calculation in order to define for what length of time such data are to be gathered. Incidentally, in the following description, the reception unit 100 defines a value equal to the found sending cycle multiplied by a predetermined number (hereinafter, referred to as "multiplied by X") as the data storage period. However, since it suffices that some data of the same sending cycle are gathered, the data storage period may also be defined as a given time that is appropriately longer than the sending cycle. The "appropriately" indicates a time that has such a length that the gathered data will not overflow the memory. The aforementioned X is an integer value input as one of predetermined set values from the M2M service management unit 104. The reception unit 100 stores the calculated data storage period as the data storage period of the primary memory 101-i.

Furthermore, the reception unit 100 is equipped with a clock function (hereinafter, referred to as "timer") that corresponds to each primary memory 101-i (i = 1 to 3). The reception unit 100, upon outputting data to a primary memory 101-i for the first time, activates the timer that corresponds to the primary memory 101-i (hereinafter, referred to as "timer of the memory 101-i"), and starts measuring time. The measured time is the time from when data of the same sending cycle start to be gathered into the primary memory 101-i.

When the time measured by the timer of the memory 101-i has passed the stored data storage period of the memory 101-i, the reception unit 100 outputs to the primary memory 101-i a signal that requests data readout (hereinafter, referred to as "readout signal"). This is to acquire the data of the same sending cycle gathered in the primary memory 101-i during the data storage period. When, after output of the readout signal, data are input to the reception unit 100 from the primary memory 101-i, the reception unit 100 outputs all the input data to the terminal DB 103. Having output all the input data to the terminal DB 103, the reception unit 100 stops the timer that corresponds to the memory 101-i once and then reactivates the timer that corresponds to the memory 101-i to start measuring time from 0 second. This is to measure the next data storage period.

### (4-2) Functions of Primary Memory 101-i (i = 1 to 3)

As for each primary memory 101-i (i = 1 to 3), when data from the reception unit 100 (data with the sending cycle attached) are input, the primary memory 101-i (i = 1 to 3) stores the data. When the readout signal is input to a primary memory 101-i (i = 1 to 3) from the reception unit 100, the primary memory 101-i (i = 1 to 3) outputs the stored data (data with the sending cycle attached) to the reception unit 100.

### (4-3) Functions of Data Manipulating Unit 102

After the data manipulating unit 102 is activated and then a predetermined set value is input from the M2M service management unit 104, the data manipulating unit 102 stores the input predetermined set value. When a predetermined timing comes after the predetermined set value is stored, the data manipulating unit 102 outputs a signal that requests data readout (hereinafter, referred to as "readout signal 2") to the terminal DB 103. This is to acquire the data of the same sending cycle. The aforementioned predetermined timing is a timing at every constant interval and is input from the M2M service management unit 104 as one of predetermined set values.

After the data manipulating unit 102 outputs the readout signal 2, data are input thereto from the terminal DB 103. The data input at this time have the sending cycle attached. The data manipulating unit 102 performs a predetermined manipulating process separately for data of the same sending cycles. Incidentally, with respect to the data on which the manipulating process has been performed, the data manipulating unit 102 attaches the sending cycle having been attached to the input data so that it will be recognized what the sending cycle of the data is. The data manipulating unit 102 outputs the data on which the manipulating process has been performed (data with the sending cycle attached) to the manipulated data storage DB 105.

### (4-4) Functions of Terminal DB 103

When data (data with the sending cycle attached) are input from the reception unit 100, the terminal DB 103 stores the data. When the readout signal 2 is input from the data manipulating unit 102, the terminal DB 103 outputs the stored data (data with the sending cycle attached) to the data manipulating unit 102.

### (4-5) Functions of M2M Service Management Unit 104

The M2M service management unit 104 is a function unit that performs setting on each part. Concretely, the M2M service management unit 104 performs processing as follows.

First, after being activated, the M2M service management unit 104 outputs predetermined set values that include the foregoing value X (the value indicating what to multiply the sending cycle by) to the reception unit 100. The predetermined set values, including the foregoing value X, are set in the M2M service management unit 104 by the user of the server 10 of the present exemplary embodiment. Incidentally, the user of the server 10 of the present exemplary embodiment can set the foregoing value X, by taking into consideration the memory size of the memory in which to accumulate data and the data size of data to receive.

Furthermore, the M2M service management unit 104 outputs predetermined set values that include a value indicating a predetermined timing to the data manipulating unit 102 and the data sending unit 106. The value that indicates the predetermined timing is set in the M2M service management unit 104 by user of the server 10 of the present exemplary embodiment.

Incidentally, the foregoing predetermined set value may be input from the for-management-purpose terminal 50. At that time, the user of the server 10 of the present exemplary embodiment writes the predetermined set value into the for-management-purpose terminal 50 and depresses a predetermined key. When the predetermined key is depressed, the for-management-purpose terminal 50 outputs the predetermined set value to the M2M service management unit 104 as described in "(2-2) Functions of For-management-purpose Terminal 50" stated above.

### (4-6) Functions of Manipulated Data Storage DB 105

When the data on which the manipulating process has been performed (data with the sending cycle attached) are input to the manipulated data storage DB 105 from the data manipulating unit 102, the manipulated data storage DB 105 stores the data. When the signal that requests readout is input from the data sending unit 106, the manipulated data storage DB 105 outputs all the stored data on which the manipulating process has been performed (data with the sending cycle attached) to the data sending unit 106.

### (4-7) Functions of Data Sending Unit 106

After the data sending unit 106 is activated and then the predetermined set value is input from the M2M service management unit 104, the data sending unit 106 stores the input set value. When a predetermined timing comes, the data sending unit 106 outputs the signal that requests data readout to the manipulated data storage DB 105. The foregoing predetermined timing is a timing at every constant interval and is input from the M2M service management unit 104 as one of the predetermined set values. After the data sending unit 106 outputs the signal that requests data readout and then the data on which manipulating process has been performed (data with the sending cycle attached) are input from the manipulated data storage DB 105, the data sending unit 106 outputs the input data to the application unit 60.

The reception unit 100 and the data sending unit 106 can be realized by using an electronic circuit and an FPGA (Field-Programmable Gate Array). Furthermore, the primary memories 101 can be realized by using a RAM (Random Access Memory). The terminal DB 103, the manipulated data storage DB 105, and the M2M service setting DB 107 can be realized by using a computation processor apparatus, such as a CPU (Central Processing Unit), and an HDD (Hard Disk Drive). The data manipulating unit 102 and the M2M service management unit 104 can be realized by general software and include a CPU (Central Processing Unit) and a memory, such as a RAM, which are employed to operate the software.

### [Description of Operations]

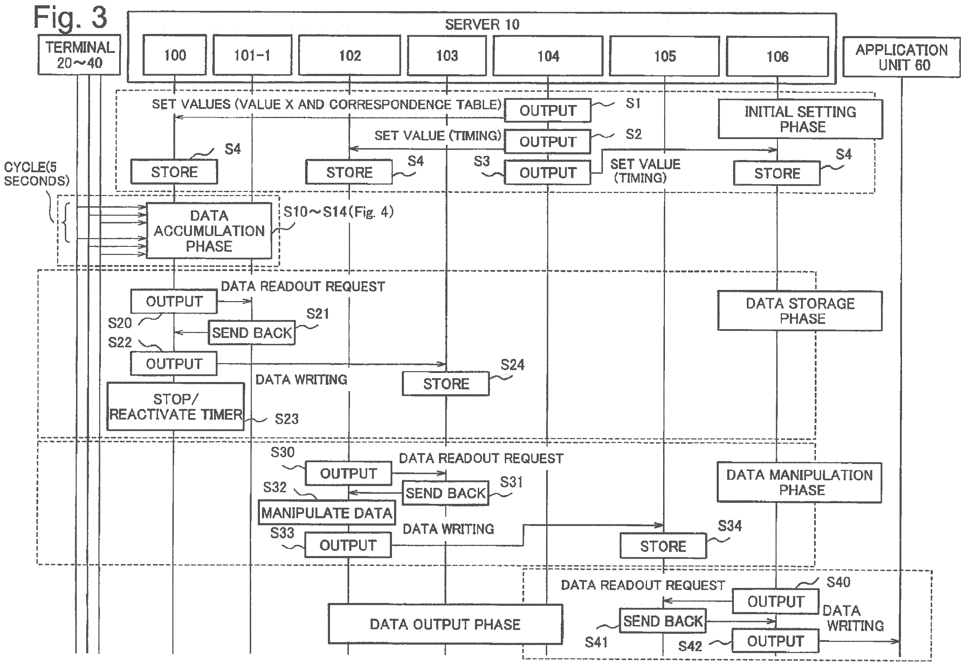

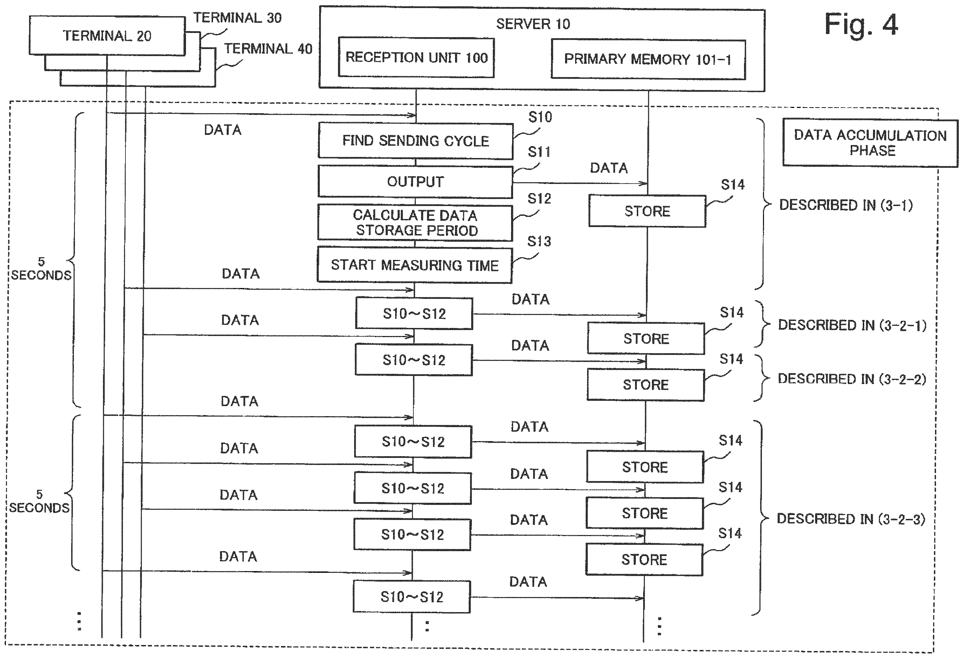

Figs. 3 and 4 are diagrams for describing operations of the server in the first exemplary embodiment of the present invention.

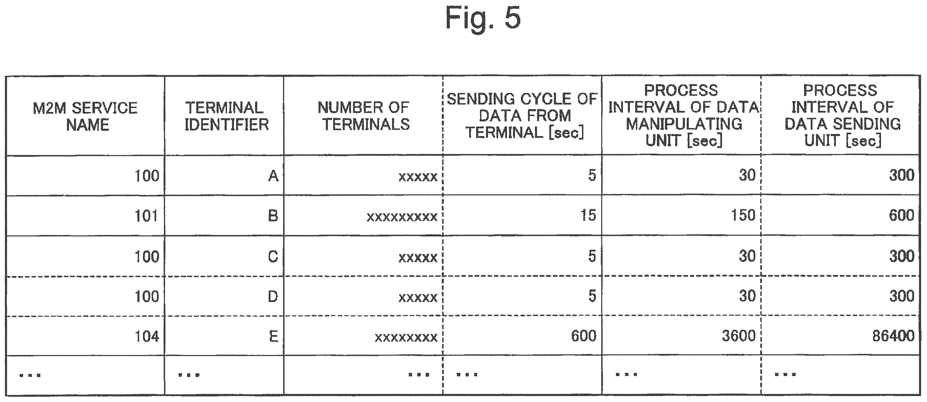

The server 10 of the present exemplary embodiment, as shown in Figs. 3 and 4, performs five phases (an initial setting phase, a data accumulation phase, a data storage phase, a data manipulation phase, and a data output phase). Fig. 4 is a diagram illustrating the data accumulation phase. Fig. 5 is a diagram for describing data that are set beforehand in the server in the first exemplary embodiment of the present invention.

Using Fig. 3 to Fig. 5, operations of the server 10 of the present exemplary embodiment will be described below.

### (1) Operations of Server 10 in Initial Setting Phase

First, the server 10, when activated, performs initial setting on each of the parts that constitute the server 10 itself, as the initial setting phase.

Concretely, the M2M service management unit 104 of the server 10 carries out S1 to S3 below on the reception unit 100, the data manipulating unit 102, and the M2M service management unit 104, so as to set predetermined set values.

### (S1)

As shown in Fig. 3, the M2M service management unit 104 of the server 10, when activated, outputs to the reception unit 100 a value indicating what to multiply the sending cycle (i.e., the value X) by and a correspondence table as predetermined set values.

The correspondence table, as shown in Fig. 5, is a table in which the terminal identifiers indicating the terminals 20, 30 and 40 and the sending cycles of the terminals are associated with each other (hereinafter, referred to as "correspondence table"). The value X and the correspondence table are set beforehand in the M2M service management unit 104 by the user of the server 10 of the present exemplary embodiment. The correspondence table is used to find the sending cycle in S10 described later. The value X is used to calculate the data storage period in S12 described later.

### (S2)

Next, the M2M service management unit 104 of the server 10, after being activated, outputs to the data manipulating unit 102 a value that indicates the predetermined timing as a predetermined set value.

The foregoing predetermined timing is a timing at every constant interval and is used as a moment for the data manipulating unit 102 to operate in S30 described later. The predetermined timing is set beforehand in the M2M service management unit 104 by the user of the server 10 of the present exemplary embodiment.

### (S3)

Next, the M2M service management unit 104 of the server 10, after being activated, outputs to the data sending unit 106 a value indicating a predetermined timing as a predetermined set value.

The predetermined timing is a timing at every constant interval and is used as a moment for the data sending unit 106 to operate in S40 described later. The value that indicates the predetermined timing is set beforehand in the M2M service management unit 104 by the user of the server 10 of the present exemplary embodiment.

### (S4)

Next, the reception unit 100, the data manipulating unit 102, and the data sending unit 106, when the predetermined set values are input by implementation of S1 to S3 described above, store the predetermined set values.

### (2) Prerequisite Operations of the Present Exemplary Embodiment

### (Operations of Terminals 20, 30 and 40)

In the present exemplary embodiment, first of all, a case where all the terminals 20, 30 and 40 send data to the server 10 in the same sending cycle will be described. A case where the terminals 20, 30 and 40 send data to the server 10 in different sending cycles will be described in "(7-3) Case Where Terminals 20, 30 and 40 Operate in Different Cycles" stated later.

Until "(7-3) Case Where Terminals 20, 30 and 40 Operate in Different Cycles" stated later, it is assumed that all the terminals 20, 30 and 40 send data to the server 10 in the same sending cycle (5 seconds) as follows.

Furthermore, each of the terminals 20, 30 and 40 is a general collection device that corresponds to an M2M service related to agriculture. The terminals 20, 30 and 40 collect data, such as temperature and humidity of an agricultural land, and send the collected data to the server 10 in every predetermined sending cycle of 5 seconds.

The server 10 receives data from each of the terminals 20, 30 and 40 in every sending cycle of 5 seconds. Incidentally, each of the terminals 20, 30 and 40, when sending data to the server 10, sends an identifier indicating the terminal itself (i.e., the terminal identifier) by containing it in the data.

### (3) Operations of Server 10 in Data Accumulation Phase

As for the data accumulation phase, the server 10, receiving data, finds what cycle the terminal is sending the data in, that is, the sending cycle (5 seconds). Furthermore, the server 10 accumulates the received data in the primary memory 101-1 that corresponds to the found sending cycle (5 seconds) for a constant time. This is to gather data of the sending cycle (5 seconds) into the primary memory 101-1.

In order to realize the operation of the server 10 in the foregoing data accumulation phase, the reception unit 100 of the server 10 carries out processes of S10 to S14 described in "(3-1) Accumulation Operation (When Data Are Received for the First Time)" and "(3-2) Accumulation Operation (When Data Are Subsequently Received)" stated below.

Incidentally, that the primary memory 101-i that corresponds to the foregoing sending cycle (5 seconds) is the primary memory 101-1 is set beforehand in the server 10 by the user of the server 10.

### (3-t) Accumulation Operation (When Data Are Received for the First Time)

### (S10)

When, after S4 described above, the reception unit 100 of the server 10 receives data from any one of the terminals (that is assumed herein to be the terminal 20) as shown in Fig. 4, the reception unit 100 finds what cycle the terminal is sending the data in, that is, the sending cycle.

Concretely, the reception unit 100, receiving data from the terminal 20, extracts the terminal identifier contained in the data and finds the sending cycle associated with the extracted terminal identifier from the correspondence table (the table input and stored as a predetermined set value in S4 described above, which is graphically shown in Fig. 5). This is to gather data of the sending cycle of 5 seconds into each primary memory 101-1 in subsequent S11. Description will be continued with the assumption that the reception unit 100 has found the sending cycle to be 5 seconds.

### (S11)

Next, having found the sending cycle (5 seconds), the reception unit 100 temporarily accumulates the data received in S10 described above into the primary memory 101-1 that corresponds to the found sending cycle (5 seconds). This is to gather data of the same sending cycle (5 seconds) in the primary memories 101-1.

Concretely, the reception unit 100 outputs the received data to the primary memories 101-1 that correspond to the sending cycle (5 seconds). Incidentally, the reception unit 100, when outputting the received data, outputs the sending cycle found in S10 described above by attaching it to the data.

### (S12)

Next, the reception unit 100 multiplies the sending cycle found in S10 by X to calculate a data storage period.

The foregoing data storage period, as described above in "(4-1) Functions of Reception Unit 100", is a time for which to store the received data in the primary memory 101-1 that corresponds to the sending cycle (5 seconds) found in S10. Furthermore, the foregoing value X is a value input as one of the predetermined set values from the M2M service management unit 104 in S4 described above.

Hereinafter, description will be continued on the assumption that X is 120 and the reception unit 100 has calculated the data storage period to be 600 seconds (10 minutes).

### (S13)

Next, when the reception unit 100 outputs data to the primary memory 101-1 for the first time, the reception unit 100 activates the timer that corresponds to the primary memory 101-1 and starts measuring time. This is to measure the time following the start of gathering data of the sending cycle (5 seconds) into the primary memory 101-1.

Furthermore, the reception unit 100, having activated the timer, stores the data storage period (10 minutes) calculated in S11 as the data storage period of the primary memory 101-1.

Incidentally, the reception unit 100 does not perform this process once the reception unit 100 has output data to the primary memory 101-1, which will also be described in "(3-2) Accumulation Operation (When Data Are Subsequently Received)" stated below.

### (S14)

When the data output from the reception unit 100 (data with the sending cycle attached) are input to the primary memory 101-1 in S11 described above, the primary memory 101-1 stores the data.

As a result, the primary memory 101-1 comes to store the data of the sending cycle (5 seconds) from the terminal 20.

### (3-2) Accumulation Operation (When Data Are Subsequently Received)

### (3-2-1) Operations When Data Are Subsequently Received from Terminal 30

After S13 described above, in the reception unit 100 of the server 10, measurement of the time by the timer that corresponds to the primary memory 101-1 is continued. When the reception unit 100 of the server 10 receives data from the terminal 30, the reception unit 100 performs S10 to S12 described above along with the timer measuring the time. As a result of performance of S10 to S12 descried above, data of the sending cycle (5 seconds) from the terminal 30 are input to the primary memory 101-1. The primary memory 101-1 performs S14 described above to store the data of the sending cycle (5 seconds) from the terminal 30. The primary memory 101-1 comes to store the data of the sending cycle (5 seconds) from the terminals 20 and 30. Incidentally, the data stored in the primary memory 101-1 have the sending cycle (5 seconds) attached thereto. The reception unit 100 has carried out S11 twice and is not in a state of having output data to the primary memory 101-1 for the first time, and therefore does not carry out S13 described above.

### (3-2-2) Operations When Data Are Subsequently Received from Terminal 40

Furthermore, when the reception unit 100 of the server 10 subsequently receives data from the terminal 40, the reception unit 100 performs S10 to S12 described above along with the timer measuring the time. As a result of performance of S10 to S12 described above, the data of the sending cycle (5 seconds) from the terminal 40 are input to the primary memory 101-1. The primary memory 141-1 performs S14 described above to store the data of the sending cycle (5 seconds) from the terminal 40. The primary memory 101-1 comes to store the data of the sending cycle (5 seconds) from the terminals 20, 30 and 40. The data stored in the primary memory 101-1 have the sending cycle (5 seconds) attached thereto. The reception unit 100 has carried out S11 three times and is not in a state of having output data to the primary memory 101-1 for the first time, and therefore does not carry out S13 described above.

### (3-2-3) Operations When Data Are Still Subsequently Received from Terminals

Subsequently, the reception unit 100 of the server 10 receives data from the terminals in every sending cycle of 5 seconds. Every time the reception unit 100 of the server 10 receives data from a terminal, the reception unit 100 performs S10 to S12 described above and the primary memory 101-1 performs S14 described above. As a result, the primary memory 101-1 successively accumulates the data of the same sending cycle (5 seconds) from the terminals 20, 30 and 40.

### (4) Operations of Server 10 in Data Storage Phase

Next, as for the data storage phase, after a constant time (data storage period) elapses, the server 10 stores the accumulated data into the terminal DB 103. The data storage phase is a preparatory phase for the next data manipulation phase (the phase in which the accumulated data of the same sending cycle of 5 seconds are processed altogether).

The operations of the server 10 in the foregoing data storage phase are realized as the reception unit 100 and the primary memory 101 of the server 10 carry out S20 to S24 described below.

### (S20)

After S 13, in the reception unit 100, the measurement of the time by the timer that corresponds to the primary memory 101-1 is continued. When the time measured by the timer that corresponds to the primary memory 101-1 passes the data storage period of the primary memory 101-1 (10 minutes stored in S13), the reception unit 100 outputs the signal that requests data readout to the primary memory 101-1 as shown in Fig. 3. This is to acquire the data of the same sending cycle (5 seconds). The foregoing signal that requests data readout will be hereinafter referred to as "readout signal".

### (S21)

Next, when the readout signal is input to the primary memory 101-1 from the reception unit 100, the primary memory 101-1 outputs the stored data to the reception unit 100. The data output at this time have the sending cycle attached thereto.

### (S22)

Next, when the data (data with the sending cycle attached) are input to the reception unit 100 from the primary memory 101-1, the reception unit 100 outputs the input data to the terminal DB 103.

### (S23)

Next, having output the data to the terminal DB 103, the reception unit 100 temporarily stops the timer that corresponds to the memory 101-1 and then reactivates the timer that corresponds to the memory 101-1 to start measuring time from 0 second. This is to measure the next data storage period.

### (S24)

Next, when the data (data with the sending cycle attached) are input to the terminal DB 103 from the reception unit 100, the terminal DB 103 stores the data.

Due to the operations of S20 to S24, data of the same sending cycle (5 seconds) are stored into the terminal DB 103 that the data manipulating unit 102 can access. Due to this, in the next data manipulation phase, the data manipulating unit 102 can read data of the sending cycle (5 seconds) from the terminal DB 103 and process the data altogether.

Incidentally, when, after S23 described above, the reception unit 100 receives data, the reception unit 100 performs S10 to S12 described above again to accumulate the data received. Then, when the time measured by the timer that corresponds to the reactivated memory 101-1 becomes equal to the next data storage period (10 minutes stored in S13), the reception unit 100 performs S20 to S23 described above again to output the accumulated data to the terminal DB 103. That is, the reception unit 100 accumulates the received data into the memories separately for the data whose sending cycles are the same. When the data storage period elapses, the reception unit 100 outputs the data accumulated so far to the terminal DB 103. This operation will be repeatedly performed. The reception unit 100, when outputting the accumulated data to the terminal DB 103, attaches the sending cycle to the data to be output. When the data are input to the terminal DB 103, the terminal DB 103 performs S24 described above to store the input data.

### (4) Operations of Server 10 in Data Manipulation Phase

The data stored in the terminal DB 103 have the sending cycle attached thereto. The server 10 performs a predetermined manipulating process on the data stored in the terminal DB 103 separately for the data of each of the same sending cycles.

In order to realize the operations of the server 10 in the foregoing data manipulation phase, the data manipulating unit 102 and the terminal DB 103 perform processes of S30 to S34 below. Incidentally, since the sending cycles and the M2M services are associated with each other, the foregoing operations equal performing manipulating processes separately for data of each of the M2M services.

### (S30)

First, when a predetermined timing comes, the data manipulating unit 102 outputs a signal that requests data readout (hereinafter, referred to as "readout signal 2") to the terminal DB 103.

The foregoing predetermined timing is a timing at every constant interval. As for the data manipulating unit 102, the predetermined timing has been input and stored as a predetermined set value from the M2M service management unit 104 in S4 described above.

### (S31)

Next, when the readout signal 2 is input to the terminal DB 103 from the data manipulating unit 102, the terminal DB 103 outputs the stored data (data stored in S24 described above) to the data manipulating unit 102.

The data stored in S24 described above are the data with the sending cycle attached. Therefore, the terminal DB 103 outputs the data with the sending cycle attached.

### (S32)

Next, when, after S31 described above, data are input to the data manipulating unit 102 from the terminal DB 103, (since the sending cycle is attached the input data), the data manipulating unit 102 performs a predetermined manipulating process separately for the data the sending cycles attached to which are the same.

Incidentally, the data manipulating unit 102 attaches to the data on which the manipulating process has been performed the sending cycle having been attached to the input data, so that it can be recognized what the sending cycle of the data manipulated is.

### (S33)

Next, the data manipulating unit 102 outputs the data on which the manipulating process has been performed (data with the sending cycle attached) to the manipulated data storage DB 105.

### (S34)

When the data on which the manipulating process has been performed (data with the sending cycle attached) are input to the manipulated data storage DB 105 from the data manipulating unit 102, the manipulated data storage DB 105 stores the data.

### (5) Operations of Server 10 in Data Output Phase

Next, as for the data output phase, the server 10 outputs the data on which the manipulating process has been performed to the application unit 60 altogether. Concretely, the data sending unit 106 and the manipulated data storage DB 105 perform the processes of S40 to S42 below.

### (S40)

First, when a predetermined timing comes, the data sending unit 106 outputs a signal that requests data readout (hereinafter, referred to as "readout signal 3") to the manipulated data storage DB 105.

The foregoing predetermined timing is a timing at every constant interval. In S4 described above, the predetermined timing is input from the M2M service management unit 104 to and stored in the data sending unit 106 as a predetermined set value.

### (S41)

Next, when the readout signal 3 is input to the manipulated data storage DB 105 from the data sending unit 106, the manipulated data storage DB 105 outputs all the stored data (data with the sending cycle attached) to the data sending unit 106.

### (S42)

Next, when the data are input to the data sending unit 106 from the manipulated data storage DB 105, the data sending unit 106 outputs the input data (data with the sending cycle attached) to the application unit 60.

As for the application unit 60, although not graphically shown, when the manipulated data are input, the application unit 60 extracts the sending cycle attached to the data. The application unit 60 performs a predetermined analysis separately for each sending cycle, that is, each M2M service, and notifies predetermined information or instructions that correspond to a result of the analysis (e.g., information, instructions, etc., necessary for cultivation of an agricultural product) to terminals (not graphically shown) possessed by M2M service users. The M2M service users can each check the information notified to the terminal possessed by the user himself and receive information, instructions or the like necessary for cultivation of an agricultural product, that is, can receive M2M services.

### (6) Recapitulation of Operations

The server 10 of the present exemplary embodiment, through the processes of S10 to S14 described above, accumulates the data received from the individual terminals into memories separately for the sending cycles of the data. The server 10 of the present exemplary embodiment, through the processes of S20 to S24 and S30 to S34 described above, performs the manipulating process for data of the same sending cycles accumulated in the memories. That is, the server 10 of the present exemplary embodiment performs the manipulating process for the data of the same M2M services. Furthermore, the server 10 of the present exemplary embodiment outputs the data on which the manipulating process was performed by S40 to S42 described above to the application unit.

As stated above, the server 10 of the present exemplary embodiment does not perform the processes (the manipulating process and the process of output to the application unit) every time the server 10 receives data from a terminal, but performs the processes separately for each M2M service. Since the server 10 of the present exemplary embodiment performs the processes separately for each M2M service, the server 10 no longer needs to enhance the processing capability according to the number of terminals.

### (7) Supplementation

### (7-1) Regarding S10

When all the terminals 20, 30 and 40 send data in the same sending cycle (e.g., 5 seconds), the reception unit 100 can gather data of the same sending cycle (e.g., 5 seconds) without carrying out S10 described above. It suffices that the reception unit 100, instead of carrying out S10 described above, subsequently gathers all the received data into the primary memory 101-1 in S11.

However, when the terminals 20, 30 and 40 send data in different sending cycles, S10 described above is necessary. By finding the sending cycles in S10, the server of the present exemplary embodiment can subsequently accumulate data of the found sending cycles into the primary memories 101-i in S11. Description regarding the case where the terminals 20, 30 and 40 implement different sending cycles will be given in "(7-3) Regarding Case Where Terminals 20, 30 and 40 Operate in Different Cycles" below.

### (7-2) Regarding Primary Memories 101-i (i = 1 to 3)

Although according to the foregoing description, the server 10 includes three primary memories 101-i (i = 1 to 3), the number thereof is not limited to three. The server 10 may include three or more primary memories 101-i. The server 10 includes, in relation to the number of kinds (hereinafter, referred to as "the number A of kinds") of the cycles in which the terminals send data, a corresponding number of primary memories 101-i (i = 1 to the number A of kinds).

For example, in the case where there are five terminals connected to the server 10 and where four terminals send data to the server 10 every 5 seconds and the other one terminal sends data every 7 seconds, there are two kinds of cycles in which the terminals send data, that is, 5 seconds and 7 seconds, so that the number A of kinds is 2. In that case, the server 10 includes at least two primary memories 101-i (i = 1 to 2).

### (7-3) Case Where Terminals 20, 30 and 40 Operate in Different Cycles

In the above description, the case where the terminals 20, 30 and 40 all send data to the server 10 in the same cycle (5 seconds) has been described. However, the terminals 20, 30 and 40 may send data to the server 10 in different sending cycle (e.g., 5 seconds or 7 seconds). In that case, the server 10 comes to receive data of several sending cycles. For example, in the case where the terminals 20 and 40 send data in a sending cycle of 5 seconds and the terminal 30 sends data in a sending cycle of 7 seconds, the server 10 comes to receive data of the sending cycle of 5 seconds (from the terminals 20 and 40) and data of the sending cycle of 7 seconds (from the terminal 30). The server 10 includes the primary memories 101-i (i = 1 to the number A of kinds) corresponding in number to the number of kinds of the sending cycles and stores the received data of the sending cycles into the primary memories 101-i (i = 1 to the number A of kinds) that correspond to the sending cycles. For example, the server 10 stores data of the sending cycle of 5 seconds (from the terminals 20 and 40) into the primary memory 101-1 that corresponds to the sending cycle of 5 seconds, and stores data of the sending cycle of 7 seconds (from the terminal 30) into the primary memory 101-2 that corresponds to the sending cycle of 7 seconds.

In order to realize operations in "(7-3) Case Where Terminals 20, 30 and 40 Operate in Different Cycles" stated above, the server 10 carries out S10 described above and then carries out S11 to S13 and S20 to S24 described above, while reading the term "primary memory 101-1" as "primary memory 101-j" throughout. The "primary memory 101-j" is a memory that corresponds to the sending cycle found in S10. The server 10 gathers data of the same sending cycles separately into the respective "primary memories 101-j". Incidentally, it is assumed that, in order to find a "primary memory 101-j'', the server 10 carries out S111 below, instead of S11 described above.

### (S111)

The reception unit 100 of the server 10 finds a "primary memory 101-j" as mentioned above as in (I) to (III) below.
(I) First, it is assumed that, in the reception unit 100, information that indicates to which one of the sending cycles (e.g., 5 seconds and 7 seconds) each of the primary memories 101-i (i = 1 to the number A of kinds) corresponds (hereinafter, referred to as "memory information") has been set beforehand by the user of the server 10.
(II) Next, the reception unit 100 finds a primary memory 101-i that corresponds to the sending cycle (e.g., 5 seconds) found in S10, from the foregoing memory information.
(III) Next, the reception unit 100 regards the primary memory 101-i found in (II) as the primary memory 101-j.

After (III) described above, the reception unit 100 temporarily accumulates the received data into the primary memory 101-j that corresponds to the sending cycle found in S10. Concretely, the reception unit 100 outputs the received data to the primary memory 101-j that corresponds to the sending cycle found in S10.

### (7-4) Regarding Sending Cycle Attached to Data

In S11 described above, the reception unit 100 attached the sending cycle to the data. Since the sending cycle corresponds to an M2M service, the attached sending cycle is an identifier that indicates the M2M service (hereinafter, referred to as "service identifier"). The reception unit 100 may attach a service identifier instead of the sending cycle.

For example, the reception unit 100. when outputting the received data in S11 described above, finds the value that indicates an M2M service name that corresponds to the sending cycle found in S10, from the correspondence table of Fig. 5, and attaches the value that indicates the M2M service name to the data as a service identifier and then outputs the data. After that, the server 10 carries out the processes starting in S30 (S30 to S34 and S40 to S42). At that time, the server 10 carries out the processes while reading the sending cycle as the service identifier. Incidentally, it is assumed that the reception unit 100, when carrying out S1 and S10, uses a correspondence table in which sending cycles and terminal identifiers are associated with values that indicate M2M service names as shown in Fig. 5.

### (7-5) Regarding Fig. 5 (Part 1)

The correspondence table used in S1 and S10 described above may be a table that the number of terminals is associated with each sending cycle as shown in Fig. 5. The number of terminals indicates the number of terminal units that send data in the associated sending cycle. The reception unit 100, in S12 described above, may find the number of terminals that corresponds to the sending cycle found in S10 from the correspondence table and may set a value obtained by multiplying the found number of terminals, a predetermined number, and the sending cycle found in S10 and further multiplying the product by X, as a data storage period. The reception unit 100 is capable of adjusting how long in time data are to be gathered from terminals, that is, the data storage period, according to the number of terminal units. Incidentally, the predetermined number is set beforehand in the reception unit 100 by the user of the server 10 of the present exemplary embodiment.

### (7-6) Regarding Fig. 5 (Part 2)

The correspondence table described above may be a table in which process intervals of the data manipulating unit 102 and process intervals of the data sending unit 106 are associated with each other separately for each of the sending cycles as shown in Fig. 5. It is assumed that in that case, the server 10 of the present exemplary embodiment performs the processes of S52 to S53, S60 to S62, and S70 to S71 below, instead of S2 to 3, S30 to S32, and S40 to S41 described above. As a result, the data manipulating unit 102 and the data sending unit 106 of the server 10 of the present exemplary embodiment are able to process the data of the sending cycles at the foregoing process intervals. Incidentally, it is assumed that the data manipulating unit 102 and the data sending unit 106 include a plurality of timers. Each timer is a general timer that inputs an interrupt signal at every assigned time interval to the data manipulating unit 102 or the data sending unit 106 for which the timer itself is provided.

### (S52)

First, instead of S2, the M2M service management unit 104 of the server 10 outputs the correspondence table (table in which process intervals of the data manipulating unit 102 and process intervals of the data sending unit 106 are associated) as a predetermined set value to the data manipulating unit 102.

### (S53)

After S52 described above, the M2M service management unit 104 of the server 10, instead of S3, outputs the correspondence table (table in which process intervals of the data manipulating unit 102 and process intervals of the data sending unit 106 are associated) as the predetermined set value to the data sending unit 106.

### (S54)

Next, when the predetermined set value is input to the reception unit 100, the data manipulating unit 102, and the data sending unit 106 as S1, S52 and S53 described above are carried out, the reception unit 100, the data manipulating unit 102, and the data sending unit 106 store the predetermined set value. The data manipulating unit 102 and the data sending unit 106 come to store the correspondence table.

Furthermore, the data manipulating unit 102 and the data sending unit 106, having stored the correspondence table, extract all of their process intervals from the stored correspondence table and activate timers that correspond in number to the number of kinds of the process intervals extracted. For example, if the process intervals that the data manipulating unit 102 has extracted are three kinds, that is, 30 seconds, 150 seconds, and 3600 seconds, the data manipulating unit 102 activates three timers. Incidentally, the data manipulating unit 102 and the data sending unit 106, when activating timers, assign the extracted process intervals to the individual timers to activate. For example, the data manipulating unit 102 assigns a first one of the timers activated with the process interval of 30 seconds, assigns a second timer with the process interval of 150 seconds, and assigns the third timer with the process interval of 3600 seconds. Each of the timers starts an operation of inputting an interrupt signal to the data manipulating unit 102 at every process interval assigned (every 30 seconds, 150 seconds, or 3600 seconds).

Furthermore, it is assumed that the data manipulating unit 102 and the data sending unit 106 store what process interval each timer has been assigned with.

The terminal DB 103 performs the processes of S60 to S62 below, instead of S30 to S32 described above.

### (S60)

First, the data manipulating unit 102, when the interrupt signal is input thereto from the timer, extracts the sending cycle associated with the process interval assigned to that timer (stored in S54) from the correspondence table (stored in S54). Having extracted the sending cycle, the data manipulating unit 102 contains the extracted sending cycle in a signal that requests data readout (hereinafter, referred to as "readout signal 4") and outputs it to the terminal DB 103.

### (S61)

Next, when the readout signal 4 is input to the terminal DB 103 from the data manipulating unit 102, the terminal DB 103 extracts the sending cycle from the readout signal 4. Furthermore, the terminal DB 103 takes out the data to which the extracted sending cycle has been attached from the stored data (stored in S24 described above) and outputs the data to the data manipulating unit 102.

### (S62)

Next, when, after S61 described above, the data is input to the data manipulating unit 102 from the terminal DB 103, the data manipulating unit 102 performs a predetermined manipulating process with respect to the input data. Incidentally, the data manipulating unit 102 directly attaches the sending cycle having been attached to the input data to the data on which the manipulating process has been performed so as to make recognizable what the sending cycle of the manipulated data is.

Furthermore, the data sending unit 106 performs the processes of S70 to S71 below, instead of S40 to S41.

### (S70)

When the interrupt signal is input to the data sending unit 106 from the timer, the data sending unit 106 extracts the sending cycle associated with the process interval assigned to that timer (stored in S54) from the correspondence table (stored in S54). Furthermore, having extracted the sending cycle, the data sending unit 106 contains the extracted sending cycle in a signal that requests data readout (hereinafter, referred to as "readout signal 5") and outputs it to the manipulated data storage DB 105.

### (S71)

Next, when the readout signal 5 is input to the manipulated data storage DB 105 from the data sending unit 106, the manipulated data storage DB 105 extracts the sending cycle from the readout signal 4. Furthermore, the manipulated data storage DB 105 takes out the data to which the extracted sending cycle has been attached from the stored data (stored in S24 described above) and outputs the data to the data sending unit 106.

### (8) Other Operations

The server 10 of the present exemplary embodiment can perform the processes of S101, S104, and S112 below, instead of S1, S4 and S12 described above. As a result, the server 10 of the present exemplary embodiment can change the data storage period according to the sending cycle found in S10 described above.

### (S101)

First, the M2M service management unit 104 outputs a correspondence table in which sending cycles, terminal identifiers, values each indicating what to multiply a sending cycle (i.e., the foregoing value X) by, and the data storage periods were associated (hereinafter, referred to as "correspondence table 2") as a predetermined set value to the reception unit 100.

The correspondence table 2 is set in the M2M service management unit 104 by the user of the server 10 of the present exemplary embodiment. The user of the server 10 of the present exemplary embodiment sets in the M2M service management unit 104 the correspondence table 2 in which the same sending cycles are associated with the same values X. The data storage period is a value obtained by multiplying a sending cycle and the value X.

### (S104)

Next, when the correspondence table 2 is input to the reception unit 100 due to S101 described above, the reception unit 100 stores the input correspondence table 2.

### (S112)

After S11, the reception unit 100 extracts the value X associated with the sending cycle found in S10 from the correspondence table 2, and finds a data storage period by multiplying the sending cycle found in S10 by X.

Incidentally, the reception unit 100 may directly find the data storage period associated with the sending cycle found in S10 from the correspondence table 2.

Incidentally, although in the foregoing description, the server 10 collects data from the terminals, data collection is not exclusively from terminals. The server 10 may collect data from general devices such as sensors.

### [Description of Advantageous Effects]

According to the present exemplary embodiment, the server of an M2M service no longer needs to enhance the processing capability according to the number of terminals even if the number of terminals increases.

This is because the server of an M2M service does not perform processes every time the server receives data from a terminal but accumulates the received data for a time and performs processes for each kind of data (concretely, separately for the data whose sending cycles are the same). As a result, the server of the M2M service performs predetermined processes not separately for each terminal but separately for the data whose sending cycles are the same, that is, separately for each M2M service, and therefore no longer needs to enhance the processing capability according to the number of terminals.

Since there is no longer need to enhance the processing capability according to the number of terminals, the server of the M2M service, even if the number of terminals increases, can control the related cost.

### [Second Exemplary Embodiment]

Next, a second exemplary embodiment of the present invention will be described.

### [Description of Configuration]

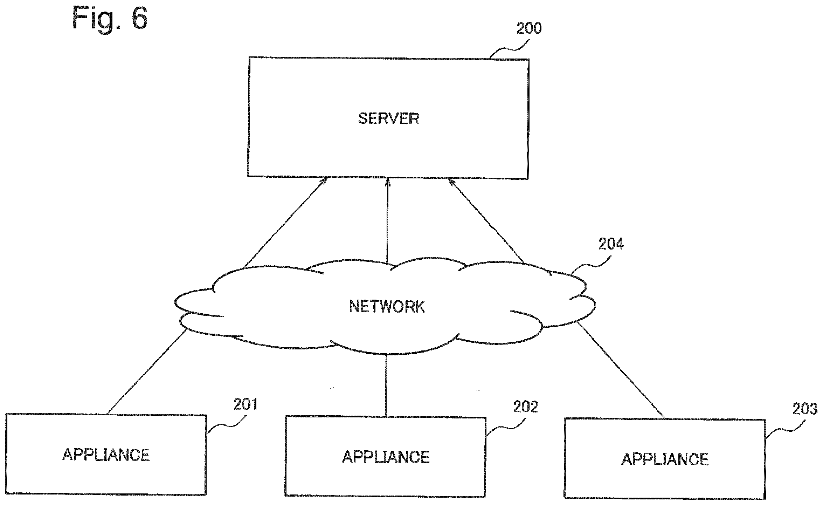

Fig. 6 is a diagram showing a configuration example of a server in the second exemplary embodiment of the present invention.

A server 200 in the second exemplary embodiment is a server that collects data from appliances 201, 202 and 203 as shown in Fig. 6. The server 200 and the appliances 201, 202 and 203 are connected via a network 204.

The appliances 201, 202 and 203 are collection devices corresponding to M2M services.

Concretely, the appliances 201 and 202 are general collection devices that correspond to an M2M service related to agriculture. The appliances 201 and 202 collect data, such as temperatures and humilities in an agricultural land and send the collected data to the server 200 in a predetermined cycle (assumed herein to be 5 seconds).

Furthermore, the appliance 203 is a general collection device that corresponds to an elderly person watching M2M service. The appliance 203 collects information about the opening and closing of a door of a room as one of the activities of living of elderly people, and sends the collected data to the server 200 in a predetermined cycle (assumed herein to be 7 seconds).

Incidentally, it is assumed that the foregoing predetermined cycles in which data are sent are different from one M2M service to another. The appliances 201, 202 and 203 may each be a terminal or a sensor.

The server 200 includes an accumulation unit 210 and a processing unit 211.

When the accumulation unit 210 of the server 200 receives data from the plurality of appliances 201, 202 and 203 connected via the network 240, the accumulation unit 210 accumulates them (the received data) in a state such that the data are identifiable separately for each of the services where the data are used.

The processing unit 211 of the server 200 takes out data by the service from the data accumulated by the accumulation unit 210 and performs a predetermined process.

The predetermined process is a process of manipulating data or a process of outputting the manipulated data to an application (not graphically shown) that analyzes the manipulated data.

Furthermore, the foregoing service is an M2M service. The M2M service is a service realized by a server collecting data from various appliances and autonomously performing controls. The present exemplary embodiment is described using as an example the case where the M2M service is a service related to agriculture or a service related to elderly person watch but is not limited thereto.

The M2M service may be an electric power service in which a server collects electric power consumption amounts from electric power consumption amount meters installed at individual households or buildings and provides optimum electricity generation amounts for electricity business operators. Furthermore, the M2M service may be an inventory management service in which a server collects stock statuses from vending machines and provides the managers of the vending machines with the necessary numbers of commodities to be supplied. Still further, the M2M service may be among the M2M services related to agriculture an M2M service in which collected data are compiled and provided as graphs or an M2M service in which collected data are analyzed and harvest times are predicted. The server 200, using the accumulation unit 210 and the processing unit 211, receives data from a plurality of appliances that correspond to individual M2M services, accumulates the data in such a state that the data are identifiable separately for each M2M service, takes out data by the service, and performs predetermined processes.

Hereinafter, operations of the server 200 of the present exemplary embodiment will be described.

### [Description of Operations]

First, when the accumulation unit 210 of the server 200 receives data from a plurality of appliances 201, 202 and 203 connected via the network 204, the accumulation unit 210 accumulates the data in such a state that the data (the received data) are identifiable separately for each service for which the data are used.

For example, the accumulation unit 210 of the server 200 may accumulate the received data in such a state that the data are identifiable separately for each service as follows.

First, when the accumulation unit 210 of the server 200 receives data from the appliances 201 and 202 that correspond to the M2M service related to agriculture, the accumulation unit 210 finds the sending cycle (5 seconds) of the received data. Furthermore, the accumulation unit 210 of the server 200 attaches a service identifier determined on the basis of the found sending cycle (5 seconds) to those data and accumulates the data into a predetermined memory provided for the accumulation unit 210 itself (hereinafter, referred to as "memory I"). Furthermore, when the server 200 receives data from the appliance 203 that corresponds to the M2M service related to elderly person watch, the server 200 finds the sending cycle (7 seconds) of the received data. The server 200 attaches a service identifier determined on the basis of the found sending cycle (7 seconds) to those data and accumulates the data into a predetermined memory provided for the server 200 itself (hereinafter, referred to as "memory II"). The memory I in which data of the sending cycle (5 seconds) are accumulated and the predetermined memory II in which data of the sending cycle (7 seconds) are accumulated may be different. Since service identifiers are attached to individual data, the processing unit 211 of the server 200 is able to identify to which service the data relates.

Next, the processing unit 211 of the server 200 takes out data by the service from the data accumulated by the accumulation unit 210 and performs a predetermined process.

Concretely, the processing unit 211 of the server 200 may take out data (from the appliances 201 and 202) to which the service identifier corresponding to the sending cycle of 5 seconds has been attached from the data accumulated in the memory I, and may perform a predetermined process. The processing unit 211 of the server 200 may also take out data (from the appliance 203) to which the service identifier corresponding to the sending cycle of 7 seconds has been attached from the data accumulated in the memory II, and may perform a predetermined process.

### [Description of Advantageous Effects]

According to the present exemplary embodiment, the server no longer needs to enhance the processing capability according to the number of appliances from which to collect data even if the number of appliances increases.

This is because the server of the present exemplary embodiment does not perform processes every time the server collects data from an appliance, but accumulates the collected data separately for each service for a time and performs processes altogether by the service. As a result, since the server performs predetermined processes not for each appliance but by the service, the server no longer needs to enhance the processing capability according to the number of appliances.

Since there is no longer a need to enhance the processing capability according to the number of appliances, the server of the present exemplary embodiment, even if the number of terminals increases, can control the related costs.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese Patent Application No. 2014-016280 filed on January 31, 2014, the disclosure of which is incorporated herein in its entirety by reference.

### [Reference Signs List]

- 10, 200: Server
- 100: Reception unit
- 101: Primary memory
- 102: Data manipulating unit
- 103: Terminal DB (Database)
- 104: M2M service management unit
- 105: Manipulated data storage DB
- 106: Data sending unit
- 107: M2M service setting DB
- 20, 30, 40: Terminal
- 50: For-management-purpose terminal
- 60: Application unit
- 201, 202, 203: Appliance
- 204: Network
- 210: Accumulation unit
- 211: Processing unit

## Claims

1. A server comprising:
accumulation means for, when receiving data from a plurality of appliances connected via a network, accumulating the data in such a state that the data are identifiable separately for each service for which the data are used; and
processing means for taking out the data by the service from the data accumulated by the accumulation means and performing a predetermined process.

2. The server according to Claim 1, wherein
the accumulation means attaches, to the data, a service identifier determined on a basis of a sending cycle of the data, and
the processing means takes out the data by referring to the service identifier attached by the accumulation means.

3. The server according to any one of Claims 1 to 2, wherein
the processing means takes out the data in a cycle equal to a predetermined number times a sending cycle of the data.

4. The server according to any one of Claims 1 to 3, wherein
the accumulation means, when receiving the data from the appliance, accumulates the received data in a predetermined memory that corresponds to a cycle in which the appliance sends the data, that is, a sending cycle, and
the processing means performs the predetermined process separately for the data which are accumulated in the predetermined memory and whose sending cycles are the same.

5. A data processing method comprising:
accumulating, when data are received from a plurality of appliances connected via a network, the data in such a state that the data are identifiable separately for each service for which the data are used; and
taking out the data by the service from the accumulated data and performing a predetermined process.

6. The data processing method according to Claim 5, wherein
in the accumulating, a service identifier determined on a basis of a sending cycle of the data is attached to the data, and
when the data are to be taken out in the process, the data are taken out by referring to the service identifier attached in the accumulating.

7. The data processing method according to any one of Claims 5 to 6, wherein,
when the data are to be taken out in the process, the data are taken out in a cycle equal to a predetermined number times a sending cycle of the data.

8. The data processing method according to any one of Claims 5 to 7, wherein
in the accumulating, the collected data are accumulated in a predetermined memory that corresponds to a cycle in which the appliance sends the data, that is, a sending cycle, and
when the process is to be performed, the process is performed separately for the data which are accumulated in the predetermined memory and whose sending cycles are the same.
